# FASCICULE DE BREVET EUROPEEN

(11) **EP 3 145 888 B1**
(45) Date de publication et mention de la délivrance du brevet: **08.11.2023**
(21) Numéro de dépôt: 15732032.6
(22) Date de dépôt: 22.05.2015
(51) Int. Cl.: C03C 17/36, E06B 3/66

(54) **SUBSTRAT MUNI D'UN EMPILEMENT A COUCHE MÉTALLIQUE PARTIELLE, VITRAGE, UTILISATION ET PROCÉDÉ.**
SUBSTRAT MIT EINER MEHRFACHSCHICHT MIT PARTIELLER METALLFOLIE, VERGLASUNGSEINHEIT, VERWENDUNG UND VERFAHREN
SUBSTRATE EQUIPPED WITH A MULTILAYER COMPRISING A PARTIAL METAL FILM, GLAZING UNIT, USE AND PROCESS

(30) Priorité: 23.05.2014 FR 1454657
(43) Date de publication de la demande: 29.03.2017
(60) Demande divisionnaire: 23189864.4
(73) Titulaire: SAINT-GOBAIN GLASS FRANCE, 92400 Courbevoie (FR)
(72) Inventeur: Caillet, Xavier, 94120 Fontenay sous Bois (FR); Lorenzzi, Jean-Carlos, 75011 Paris (FR); Georges, Benoit, Abu Dhabi (AE)
(74) Mandataire: Saint-Gobain Recherche
(86) Numéro de dépôt international: PCT/FR2015/051352
(87) Numéro de publication internationale: WO 2015/177479

(56) Documents cités:
- WO-A1-2014/164695
- WO-A2-2014/164674
- FR-A1- 2 998 564
- US-A1- 2011 236 715

## Description

L'invention concerne un substrat transparent notamment en un matériau rigide minéral comme le verre, ledit substrat étant revêtu d'un empilement de couches minces comprenant une ou plusieurs couches fonctionnelles pouvant agir sur le rayonnement solaire et/ou le rayonnement infrarouge de grande longueur d'onde.

L'invention concerne plus particulièrement un substrat, notamment un substrat verrier transparent, muni d'un empilement de couches minces comportant une alternance de « n » couches fonctionnelles métalliques, notamment de couches fonctionnelles à base d'argent ou d'alliage métallique contenant de l'argent, et de « (n + 1) » revêtements antireflet, avec n nombre entier ≥ 1, de manière à ce que la ou chaque couche fonctionnelle soit disposée entre deux revêtements antireflet. Chaque revêtement antireflet comporte au moins une couche antireflet et chaque revêtement étant, de préférence, composé d'une pluralité de couches, dont une couche au moins, voire chaque couche, est une couche antireflet. La notion de couche antireflet est ici synonyme de celle de couche diélectrique ; la notion de couche diélectrique étant utilisée surtout par opposition à la notion de couche fonctionnelle métallique, qui par sa nature métallique ne peut pas être diélectrique.

L'invention concerne plus particulièrement l'utilisation de tels substrats pour fabriquer des vitrages d'isolation thermique et/ou de protection solaire. Ces vitrages peuvent être destinés aussi bien à équiper les bâtiments que les véhicules, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments et les habitacles de véhicules.

Ces substrats peuvent en particulier être intégrés dans des dispositifs électroniques et l'empilement peut alors servir d'électrode pour la conduction d'un courant (dispositif éclairant, dispositif d'affichage, panneau photovoltaïque, vitrage électrochrome, ...) ou peuvent être intégrés dans des vitrages présentant des fonctionnalités particulières, comme par exemple des vitrages chauffants.

Un type d'empilement de couches connu pour conférer aux substrats de telles propriétés est constitué d'une couche métallique fonctionnelle à propriétés de réflexion dans l'infrarouge et/ou dans le rayonnement solaire, notamment une couche fonctionnelle métallique à base d'argent ou d'alliage métallique contenant de l'argent ou complètement en argent.

Dans ce type d'empilement, la couche métallique fonctionnelle se trouve ainsi disposée entre deux revêtements diélectrique antireflet comportant chacun en général plusieurs couches qui sont chacune en un matériau antireflet du type nitrure et notamment nitrure de silicium ou d'aluminium ou du type oxyde.

Un revêtement de blocage est toutefois intercalé parfois entre un ou chaque revêtement antireflet et la couche métallique fonctionnelle, le revêtement de blocage disposé sous la couche fonctionnelle en direction du substrat la protège lors d'un éventuel traitement thermique à haute température, du type bombage et/ou trempe et le revêtement de blocage disposé sur la couche fonctionnelle à l'opposé du substrat protège cette couche d'une éventuelle dégradation lors du dépôt du revêtement antireflet supérieur et lors d'un éventuel traitement thermique à haute température, du type bombage et/ou trempe.

Actuellement, il est généralement souhaité que chaque couche fonctionnelle métallique soit une couche complète, c'est-à-dire soit constituée sur la totalité de sa surface et sur la totalité de son épaisseur du matériau métallique considéré.

L'homme du métier considère que pour un matériau donné (par exemple l'argent), dans les conditions habituelles de dépôt de ce matériau, une couche complète n'est obtenue qu'à partir d'une certaine épaisseur seulement.

L'énergie d'adhésion entre une couche d'argent complète et les couches antireflet est très faible, de l'ordre de 1 J/m² environ, et l'énergie d'adhésion entre deux couches antireflet est cinq à neuf fois plus élevée que celle entre l'argent et une autre couche antireflet. L'énergie d'adhésion d'un empilement comportant au moins une couche fonctionnelle en argent ou à base d'argent est donc limitée par cette faible énergie d'adhésion d'une couche fonctionnelle métallique complète avec les autres matériaux.

Les inventeurs se sont intéressés à la possibilité de déposer des empilements de couches minces avec une ou plusieurs couches métalliques et avec pour une couche métallique unique ou plusieurs couches métalliques, une épaisseur inférieure à l'épaisseur minimum requise pour obtenir une couche complète dans les conditions considérées.

Les inventeurs ont constatés que des résistances mécaniques élevées, et même, encore plus surprenant, des résistances chimiques élevées, pouvaient être obtenues pour des empilements comportant une couche métallique discontinue entre le substrat et une seule ou une première couche fonctionnelle métallique continue d'un empilement.

En outre, les inventeurs ont constaté que les empilements ainsi réalisés étaient transparents, sans voile (« haze ») ou sans irisation, et avec des couleurs, tant en transmission qu'en réflexion, qui pouvaient être similaires à celles obtenues avec des empilements à couche(s) fonctionnelle(s) métalliques(s) complète(s) similaire(s).

Il est alors possible d'utiliser la plage spécifique d'absorption non uniforme dans le visible d'une telle couche métallique discontinue pour obtenir des effets d'absorption spécifique dans certaines plages de longueur d'onde et de neutralisation de certaines caractéristiques de couleur (notamment la couleur en réflexion côté empilement ou côté substrat).

Il est par ailleurs possible, dans le cadre de l'invention, d'obtenir un facteur solaire plus élevé que dans le cas d'un empilement similaire ne comprenant aucune couche métallique discontinue ou comprenant une ou des couches absorbantes continues.

L'art antérieur connaît de la demande internationale de brevet N° WO 2011/123402 des empilements à trois couches fonctionnelles métalliques, dont la couche fonctionnelle métallique qui est située entre les deux autres est une couche discontinue. Cette couche discontinue présente une absorption lumineuse dans le visible qui est élevée et il est écrit que le dépôt de cette couche métallique discontinue sur du stannate de zinc plutôt que de l'oxyde de zinc augmente l'absorption lumineuse dans le visible de l'empilement, c'est-à-dire de la couche discontinue métallique. Toutefois, les valeurs d'absorption lumineuse pour les exemples 1 à 5, 9, ainsi que pour le contre-exemple 6 ne sont pas indiquées.

US 2011/236715 A1 divulgue un article revêtu comprenant un substrat de verre, une couche métallique continue à base d'argent entre une première couche antireflet et une seconde couche antireflet. En outre, le document divulgue une couche métallique discontinue.

Par ailleurs, les valeurs intégrées de transmission lumineuse, de réflexion lumineuse côté substrat ou côté empilement, ne sont pas indiquées ; pour l'empilement sur substrat seul (tableau 1), seules les couleurs après traitement thermique de trempe dans le système L*a*b* , en réflexion côté empilement, en réflexion côté substrat et en transmission, sont indiquées.

La transmission lumineuse (VLT) est indiquée pour les exemples 1-4, mais uniquement après montage en double vitrage ; elle est en moyenne de 40 %.

L'invention a ainsi pour objet, dans son acception la plus large, un substrat selon la revendication 1. Ce substrat est revêtu sur une face d'un empilement de couches minces comportant au moins une couche fonctionnelle métallique à base d'argent ou en argent présentant une épaisseur e comprise entre 7 nm et 20 nm en intégrant ces valeurs et deux revêtements antireflet, lesdits revêtements antireflet comportant chacun au moins une couche antireflet, ladite couche fonctionnelle étant disposée entre les deux revêtements antireflet. Ledit empilement comporte une couche métallique discontinue inférieure présentant une épaisseur e' comprise entre 0,5 nm et 5 nm en intégrant ces valeurs, ladite couche métallique discontinue inférieure étant située entre d'une part ladite face et d'autre part une unique ou la première couche fonctionnelle métallique en partant de ladite face.

Dans une variante, ledit empilement comporte une unique couche métallique discontinue inférieure.

Dans une autre variante, ledit empilement comportant en outre une couche métallique discontinue supérieure présentant une épaisseur e' comprise entre 0,5 nm et 5 nm en intégrant ces valeurs, ladite couche métallique discontinue supérieure étant située au-dessus d'une unique ou de la dernière couche fonctionnelle métallique en partant de ladite face. Dans cette variante, ledit empilement comporte alors de préférence, seulement deux couches métalliques discontinues une inférieure et une supérieure.

Selon l'invention, la couche métallique discontinue ainsi déposée, ou chaque couche métallique discontinue ainsi déposée, est une couche autostructurée présentant de préférence une structuration sous la forme d'ilots connectés entre eux, avec des zones non couvertes entre les ilots.

Ladite couche métallique discontinue inférieure est de préférence située à l'intérieur d'un revêtement antireflet inférieur, avec une couche antireflet de chaque côté ; l'éventuelle couche métallique discontinue supérieure est de préférence située à l'intérieur d'un revêtement antireflet supérieur, le dernier revêtement antireflet de l'empilement en partant du substrat, avec une couche antireflet de chaque côté.

Dans le cas où ledit empilement de couches minces comporte plusieurs couches fonctionnelles métalliques, notamment plusieurs couches fonctionnelles métalliques à base d'argent ou en argent, de préférence, aucun des revêtements antireflet qui sont situés entre deux couches fonctionnelles métalliques ne comporte de couche métallique discontinue présentant une épaisseur comprise entre 0,5 nm et 5 nm en intégrant ces valeurs.

Au sens de l'invention, la couche métallique discontinue, ou chaque couche métallique discontinue peut présenter une épaisseur e' comprise entre 0,5 nm et 2 nm en intégrant ces valeurs.

Ladite, ou chaque, couche métallique discontinue est située d'une part directement sur une couche antireflet présentant un indice de réfraction à 550 nm d'au moins 1,9 et d'autre part directement sous une couche antireflet présentant un indice de réfraction à 550 nm d'au moins 1,9 ; Pour ladite, ou chaque, couche métallique discontinue, l'indice de réfraction de ladite couche antireflet directement inférieure est de préférence identique à l'indice de réfraction de ladite couche antireflet directement supérieure.

De préférence par ailleurs, ladite, ou chaque, couche métallique discontinue est située d'une part directement sur une couche antireflet présentant une épaisseur optique à 550 nm comprise entre 1 nm et 8 nm en intégrant ces valeurs, voire comprise entre 2 nm et 6 nm en intégrant ces valeurs et d'autre part directement sous une couche antireflet présentant une épaisseur optique à 550 nm comprise entre 1 nm et 8 nm en intégrant ces valeurs, voire comprise entre 2 nm et 6 nm en intégrant ces valeurs.

Comme cette couche métallique discontinue unique, ou au plus de préférence dans l'empilement ces deux couches métalliques discontinues, n'est (ou ne sont) pas continue(s), cela permet d'avoir un contact direct entre les couches antireflet qui entourent la ou chaque couche métallique discontinue. Ces zones ont une adhésion forte. Une fissure éventuelle développée à l'interface la plus faible, donc celle entre la couche métallique discontinue et la couche antireflet adjacente, devra aussi se propager entre les deux couches antireflet pour avancer, ce qui demande une énergie plus élevée. C'est donc de cette façon que l'énergie d'adhésion de l'empilement à cet endroit se voit considérablement améliorée, en particulier par rapport à une couche absorbante continue.

Par « couche discontinue » au sens de la présente invention, il faut comprendre que lorsqu'est considéré un carré de dimensions quelconques à la surface de l'empilement selon l'invention, alors, dans ce carré, la couche fonctionnelle discontinue n'est présente, de préférence, que sur 50 % à 98 % de la surface du carré, voire sur 53 % à 83 % de la surface du carré, voire respectivement sur 63 % à 83 %.

Le carré considéré est situé dans une partie principale du revêtement ; il ne s'agit pas dans le cadre de l'invention de réaliser un bord particulier ou un contour particulier qui serait ensuite caché pour l'utilisation finale.

Selon l'invention, ce type de couche métallique discontinue autostructurée présente une énergie d'adhésion supérieure à une couche fonctionnelle métallique continue et ses propriétés optiques (transmission lumineuse, réflexion lumineuse et émissivité) sont diminuées tout en restant dans des gammes acceptables pour certaines applications spécifiques.

De préférence, ladite, ou chaque, couche métallique discontinue est, à base d'argent ou est en argent.

De préférence, ladite, ou chaque, couche métallique discontinue n'est pas en contact direct, ni en dessous, ni au-dessus, avec une couche métallique continue.

Il est possible par ailleurs que :
- ledit revêtement antireflet disposé sous chaque couche fonctionnelle métallique comporte une couche antireflet d'indice moyen en un matériau présentant un indice de réfraction compris entre 1,8 et 2,2 à 550 nm, cette couche antireflet d'indice moyen étant de préférence à base d'oxyde et/ou cette couche antireflet d'indice moyen présentant de préférence une épaisseur physique comprise entre 5 et 35 nm.
- ledit revêtement antireflet disposé entre la face et une première ou l'unique couche fonctionnelle métallique comporte une couche antireflet d'indice haut en un matériau présentant un indice de réfraction compris entre 2,3 et 2,7 à 550 nm, cette couche antireflet d'indice haut étant de préférence à base d'oxyde et/ou cette couche antireflet d'indice haut présentant de préférence une épaisseur physique comprise entre 5 et 25 nm ;
- le revêtement antireflet disposé au-dessus d'une première ou l'unique couche fonctionnelle métallique, à l'opposé de la face, comporte une couche antireflet d'indice moyen en un matériau présentant un indice de réfraction compris entre 1,8 et 2,2 à 550 nm, cette couche antireflet d'indice moyen étant de préférence à base d'oxyde et/ou cette couche antireflet d'indice moyen présentant de préférence une épaisseur physique comprise entre 5 et 35 nm ;
- le revêtement antireflet disposé au-dessus d'une première ou l'unique couche fonctionnelle métallique, à l'opposé de la face, comporte une couche antireflet d'indice haut en un matériau présentant un indice de réfraction compris entre 2,3 et 2,7 à 550 nm, cette couche antireflet d'indice haut étant de préférence à base d'oxyde et/ou cette couche antireflet d'indice haut présentant de préférence une épaisseur physique comprise entre 5 et 25 nm ;
- ledit empilement comporte deux ou trois couches fonctionnelles métalliques à base d'argent ou en argent présentant chacune une épaisseur e comprise entre 7 nm et 20 nm en intégrant ces valeurs et ledit empilement comporte en outre une unique couche métallique discontinue inférieure présentant une épaisseur e' comprise entre 0,5 nm et 5 nm en intégrant ces valeurs, ladite couche métallique discontinue inférieure étant située entre d'une part ladite face et d'autre part la première couche fonctionnelle métallique en partant de ladite face ;
- ledit empilement comporte deux ou trois couches fonctionnelles métalliques à base d'argent ou en argent présentant chacune une épaisseur e comprise entre 7 nm et 20 nm en intégrant ces valeurs et ledit empilement comporte en outre uniquement deux couches métalliques discontinues : une couche métallique discontinue inférieure présentant une épaisseur e' comprise entre 0,5 nm et 5 nm en intégrant ces valeurs, ladite couche métallique discontinue inférieure étant située entre d'une part ladite face et d'autre part une unique ou la première couche fonctionnelle métallique en partant de ladite face et une couche métallique discontinue supérieure présentant une épaisseur e' comprise entre 0,5 nm et 5 nm en intégrant ces valeurs, ladite couche métallique discontinue supérieure étant située au-dessus de la dernière couche fonctionnelle métallique en partant de ladite face.

Par « revêtement » au sens de la présente invention, il faut comprendre qu'il peut y avoir une seule couche ou plusieurs couches de matériaux différents à l'intérieur du revêtement.

Par « empilement », il faut comprendre un ensemble de couches minces déposées les unes sur les autres, sans interposition entre ces couches d'un substrat minéral (comme du verre) ou organique (comme une feuille de matière plastique).

Comme habituellement, par « couche à base d'un matériau » il faut comprendre que la couche est constituée majoritairement de ce matériau, c'est-à-dire que l'élément chimique du matériau, ou le cas échéant le produit du matériau considéré dans sa formule stoechiométrique stable, constitue au moins 50 %, en pourcentage atomique de la couche considérée.

Comme habituellement, « couche fonctionnelle métallique » désigne le dépôt d'une couche réfléchissant les IR et qui est continue.

Comme habituellement aussi, par « couche antireflet» au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Il est rappelé que n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée.

Les valeurs d'indice de réfraction indiquées dans le présent document sont les valeurs mesurées comme habituellement à la longueur d'onde de 550 nm.

Selon l'invention, ladite, ou chaque couche métallique discontinue peut présenter une épaisseur e' :
- 1,0 ≤ e' ≤ 4,5 nm, voire 1,0 ≤ e' ≤ 4,0 nm ; ou 2,0 ≤ e' ≤ 4,5 nm, voire 2,0 ≤ e' ≤ 4,0 nm, déposée sur une couche à base de dioxyde de titane TiO₂, ou
- 1,0 ≤ e' ≤ 4,5 nm, voire 1,0 ≤ e' ≤ 4,0 nm ; ou 2,0 ≤ e' ≤ 4,5 nm, voire 2,0 ≤ e' ≤ 4,0 nm, déposée sur une couche à base d'oxyde de zinc et d'étain SnZnOₓ, ou
- 1,0 ≤ e' ≤ 5,0 nm, voire 1,0 ≤ e' ≤ 4,5 nm ; ou 2,0 ≤ e' ≤ 5,0 nm, voire 2,0 ≤ e' ≤ 4,5 nm, déposée sur une couche à base d'oxyde de zinc ZnO, ou
- 1,0 ≤ e' ≤ 5,0 nm, voire 1,0 ≤ e' ≤ 4,0 nm ; ou 2,0 ≤ e' ≤ 5,0 nm, voire 2,0 ≤ e' ≤ 4,0 nm, déposée sur une couche à base de nitrure de silicium Si₃N₄.

De préférence, l'empilement selon l'invention est déposé directement sur la face du substrat.

Pour un empilement selon l'invention comportant une seule couche fonctionnelle métallique continue, cette couche fonctionnelle peut présenter une épaisseur comprise entre 8 et 17 nm, voire entre 10 et 15 nm, voire entre 12 et 14 nm pour réaliser un empilement bas émissif efficace.

Dans une autre version particulière de l'invention, au moins une couche fonctionnelle métallique est déposée directement sur un revêtement de sous-blocage disposé entre la couche fonctionnelle et le revêtement antireflet sous-jacent à la couche fonctionnelle et/ou au moins une couche fonctionnelle est déposée directement sous un revêtement de sur-blocage disposé entre la couche fonctionnelle et le revêtement antireflet sus-jacent à la couche fonctionnelle et le revêtement de sous-blocage et/ou le revêtement de sur-blocage comprend une couche fine à base de nickel ou de titane présentant une épaisseur physique comprise entre 0,2 nm et 2,5 nm en incorporant ces valeurs.

La dernière couche du revêtement antireflet sus-jacent, celle la plus éloignée du substrat, peut être à base d'oxyde, et est de préférence alors déposée sous stoechiométrique ; elle peut être notamment à base de dioxyde de titane (en TiOₓ) ou à base d'oxyde mixte de zinc et d'étain (en Sn_{z}Zn_{y}Oₓ).

L'empilement peut ainsi comporter une dernière couche (« overcoat » en anglais), c'est-à-dire une couche de protection, déposée de préférence sous stoechiométrique. Cette couche se retrouve oxydée pour l'essentiel stoechiométriquement dans l'empilement après le dépôt.

L'invention concerne en outre un vitrage multiple comportant au moins deux substrats qui sont maintenus ensemble par une structure de châssis, ledit vitrage réalisant une séparation entre un espace extérieur et un espace intérieur, dans lequel au moins une lame de gaz intercalaire est disposée entre les deux substrats, un substrat étant selon l'invention.

Dans une variante particulière, l'empilement selon l'invention est positionné en face 4 d'un double vitrage, c'est-à-dire sur une face du vitrage qui n'est pas protégée par la lame de gaz intercalaire car l'empilement est particulièrement résistant.

Le vitrage selon l'invention incorpore au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse recherché et/ou de l'aspect colorimétrique recherché pour le vitrage une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre / feuille de verre. Le polymère peut notamment être à base de polyvinylbutyral PVB, éthylène vinylacétate EVA, polyéthylène téréphtalate PET, polychlorure de vinyle PVC.

L'invention concerne en outre l'utilisation d'une, et de préférence d'au plus deux, couche(s) métallique(s) discontinue(s) selon l'invention dans un empilement comportant au moins une couche fonctionnelle métallique à base d'argent ou en argent présentant une épaisseur e comprise entre 7 nm et 20 nm en intégrant ces valeurs et deux revêtements antireflet, lesdits revêtements antireflet comportant chacun au moins une couche antireflet, ladite couche fonctionnelle étant disposée entre les deux revêtements antireflet, ledit empilement comportant en outre une couche métallique discontinue inférieure présentant une épaisseur e' comprise entre 0,5 nm et 5 nm en intégrant ces valeurs, ladite couche métallique discontinue inférieure étant située entre d'une part ladite face et d'autre part une unique ou la première couche fonctionnelle métallique en partant de ladite face ; une éventuelle autre couche métallique discontinue étant une couche métallique discontinue supérieure située au-dessus d'une unique ou de la dernière couche fonctionnelle métallique en partant de ladite face et présentant une épaisseur e' comprise entre 0,5 nm et 5 nm en intégrant ces valeurs.

L'invention concerne en outre un procédé de dépôt d'une, et de préférence d'au plus deux, couche(s) métallique(s) discontinue(s) selon l'invention dans un empilement comportant au moins une couche fonctionnelle métallique à base d'argent ou en argent présentant une épaisseur e comprise entre 7 nm et 20 nm en intégrant ces valeurs et deux revêtements antireflet, lesdits revêtements antireflet comportant chacun au moins une couche antireflet, ladite couche fonctionnelle étant disposée entre les deux revêtements antireflet, ledit empilement comportant en outre une couche métallique discontinue inférieure présentant une épaisseur e' comprise entre 0,5 nm et 5 nm en intégrant ces valeurs, ladite couche métallique discontinue inférieure étant située entre d'une part ladite face et d'autre part une unique ou la première couche fonctionnelle métallique en partant de ladite face ; une éventuelle autre couche métallique discontinue étant située au-dessus d'une unique ou de la dernière couche fonctionnelle métallique en partant de ladite face et présentant une épaisseur e' comprise entre 0,5 nm et 5 nm en intégrant ces valeurs.

Avantageusement, la présente invention permet ainsi de réaliser un empilement de couches minces présentant, déposé sur un substrat transparent, une transmission lumineuse dans le visible T_{L} > 50 % et une réflexion lumineuse dans le visible R_{c} (côté empilement) inférieure à 20 % et même inférieure à 10 % avec des couleurs relativement neutres en transmission et en réflexion, tout en présentant une émissivité inférieure à celle du substrat seul.

Avantageusement, la présente invention permet ainsi de réaliser un empilement de couches minces à 1, 2, 3, 4, voire plus encore, couche(s) fonctionnelle(s) métallique(s) à base d'argent ou en argent et comportant une, et de préférence au plus deux, couche(s) métallique(s) discontinue(s) afin que l'empilement présente une résistance mécanique élevée et/ou une résistance chimique élevée.

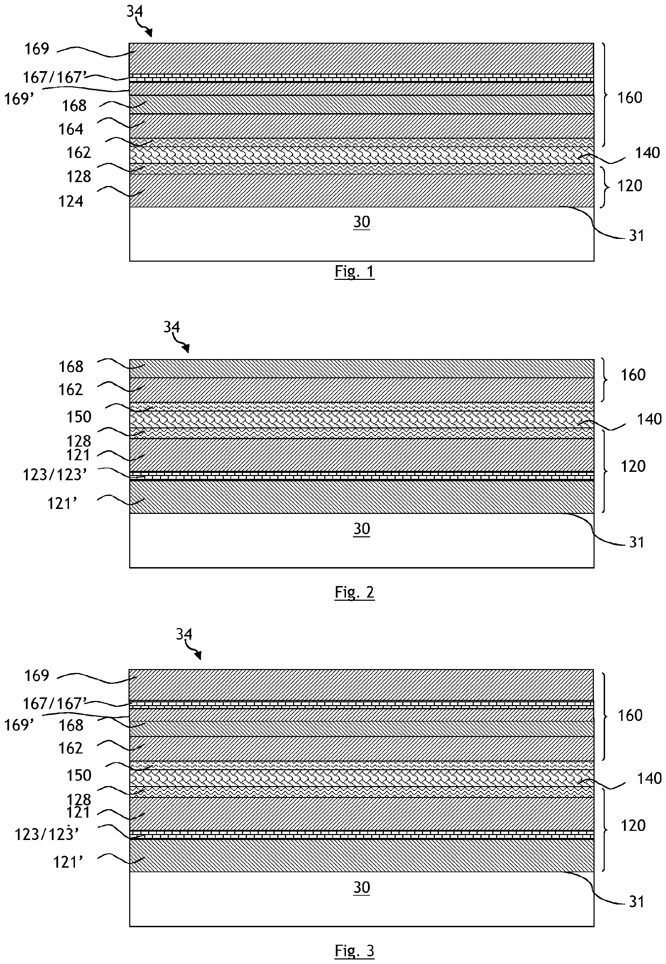

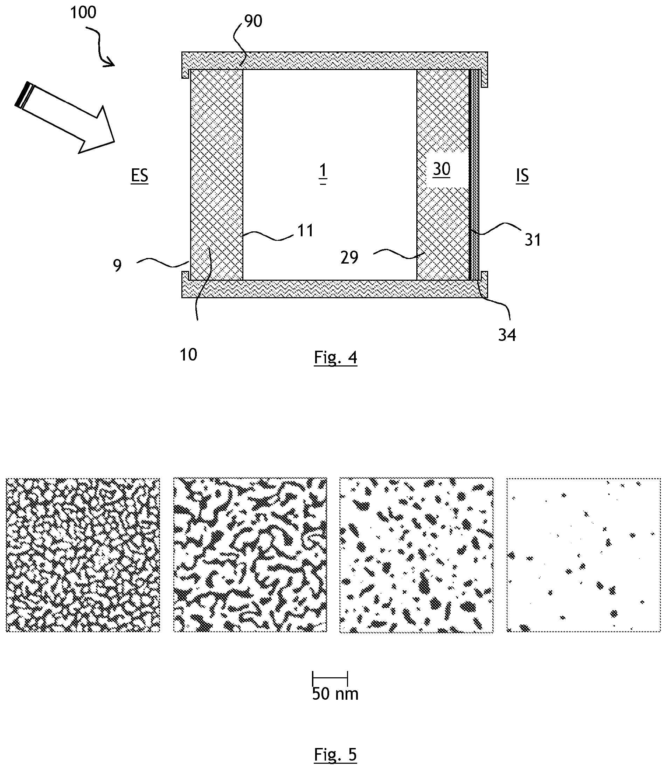

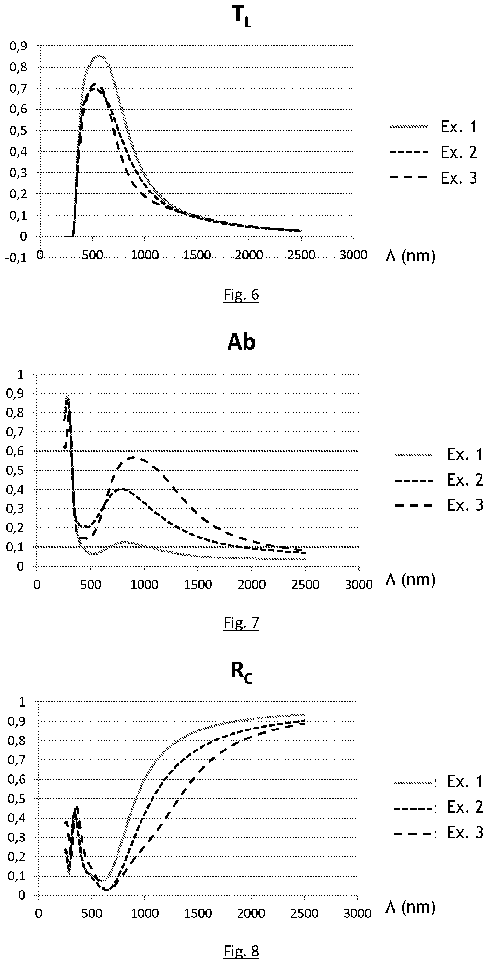

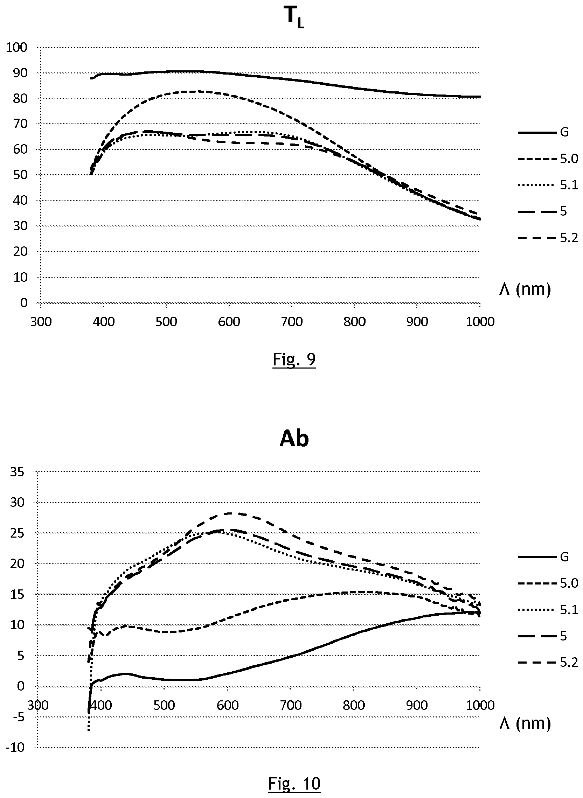

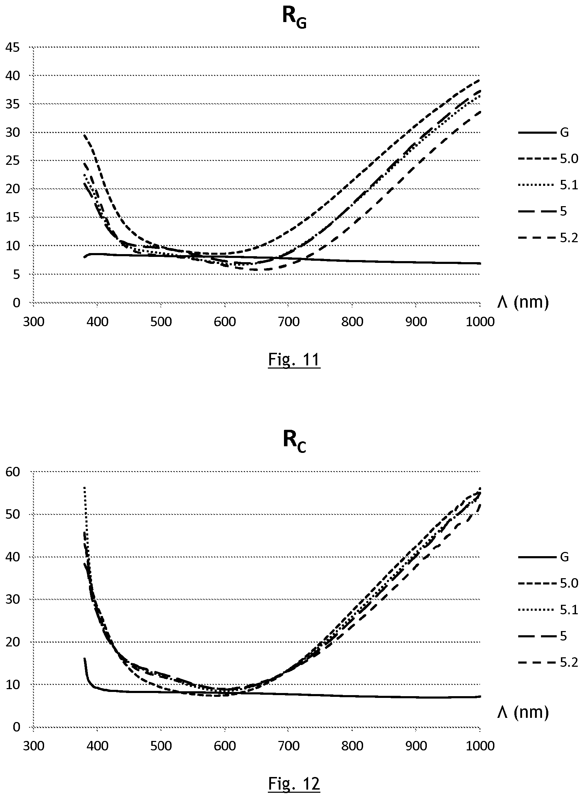

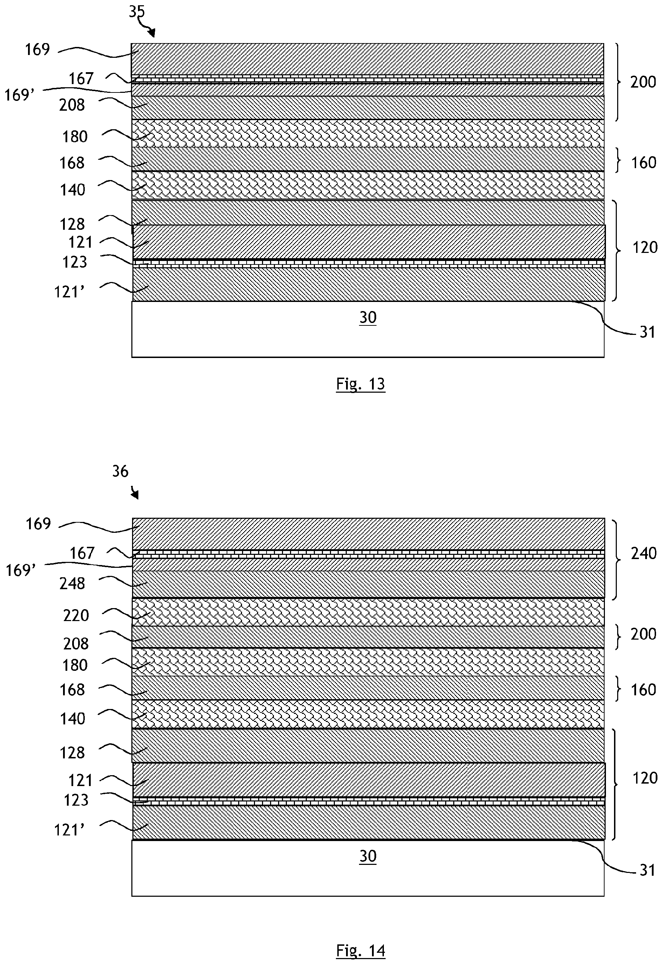

Les détails et caractéristiques avantageuses de l'invention ressortent des exemples non limitatifs suivants, illustrés à l'aide des figures ci-jointes illustrant :
- en figure 1, un empilement monocouche fonctionnelle à une couche métallique discontinue, la couche métallique discontinue étant déposée au-dessus de la couche fonctionnelle métallique ;
- en figure 2, un empilement monocouche fonctionnelle à une couche métallique discontinue, la couche métallique discontinue étant déposée en dessous de la couche fonctionnelle métallique ;
- en figure 3, un empilement monocouche fonctionnelle à deux couches métalliques discontinues, une couche métallique discontinue étant déposée au-dessus de la couche fonctionnelle métallique et une couche métallique discontinue étant déposée en dessous de la couche fonctionnelle métallique ;
- en figure 4, une solution de double vitrage incorporant un empilement selon l'invention ;
- en figure 5, les images en MET binaire, de gauche à droite, pour une couche métallique discontinue en argent présentant un taux d'occupation surfacique de 53 % à 98 % ;
- en figure 6, la transmission lumineuse T_{L}, (exprimée sous forme de facteur de 0 à 1 pour des valeurs habituellement considérées 0 à 100 %) des exemples 1 à 3 en fonction de la longueur d'onde λ ;
- en figure 7, le spectre d'absorption Ab (exprimée sous forme de facteur de 0 à 1 pour des valeurs habituellement considérées 0 à 100 %) des exemples 1 à 3 en fonction de la longueur d'onde λ ;
- en figure 8, la réflexion lumineuse R_{L}, (exprimée sous forme de facteur de 0 à 1 pour des valeurs habituellement considérées 0 à 100 %) des exemples 1 à 3 en fonction de la longueur d'onde λ ;
- en figure 9, la transmission lumineuse T_{L}, en %, du substrat seul et des exemples 5, 5.0, 5.1 et 5.2 en fonction de la longueur d'onde λ ;
- en figure 10, le spectre d'absorption Ab, en %, du substrat seul et des exemples 5, 5.0, 5.1 et 5.2 en fonction de la longueur d'onde λ ;
- en figure 11, la réflexion lumineuse R_{G}, en %, côté opposé à l'empilement, du substrat seul et des exemples 5, 5.0, 5.1 et 5.2 en fonction de la longueur d'onde λ ;
- en figure 12, la réflexion lumineuse R_{C}, en %, côté de l'empilement, du substrat seul et des exemples 5, 5.0, 5.1 et 5.2 en fonction de la longueur d'onde λ ;
- en figure 13, un empilement bicouche fonctionnelles à deux couches métalliques discontinues, une couche métallique discontinue étant déposée en dessous de la première couche fonctionnelle métallique et une couche métallique discontinue étant déposée au-dessus de la seconde couche fonctionnelle métallique ;
- en figure 14 un empilement tri-couche fonctionnelles à deux couches métalliques discontinues, une couche métallique discontinue étant déposée en dessous de la première couche fonctionnelle métallique et une couche métallique discontinue étant déposée au-dessus de la troisième couche fonctionnelle métallique.

Les figures 1 à 3 illustrent une structure d'un empilement 34 monocouche fonctionnelle déposé sur un substrat 30 verrier, transparent, et plus précisément sur une face 31 de ce substrat 30, dans laquelle la couche fonctionnelle 140 unique, à base d'argent ou d'alliage métallique contenant de l'argent et de préférence uniquement en argent, est disposée entre deux revêtements antireflet, le revêtement antireflet sous-jacent 120 situé en dessous de la couche fonctionnelle 140 en direction du substrat 30 et le revêtement antireflet sus-jacent 160 disposé au-dessus de la couche fonctionnelle 140 à l'opposé du substrat 30.

Ces deux revêtements antireflet 120, 160, comportent chacun au moins une couche antireflet 128, 168.

Eventuellement, d'une part la couche fonctionnelle 140 peut être déposée directement sur un revêtement de sous-blocage disposé entre le revêtement antireflet sous-jacent 120 et la couche fonctionnelle 140 et d'autre part la couche fonctionnelle 140 peut être déposée directement sous un revêtement de sur-blocage 150 disposé entre la couche fonctionnelle 140 et le revêtement antireflet sus-jacent 160.

Les couches de sous et/ou sur-blocage, bien que déposées sous forme métalliques et présentées comme étant des couches métalliques, sont dans la pratique des couches oxydées car leur fonction première est de s'oxyder au cours du dépôt de l'empilement afin de protéger la couche fonctionnelle.

Ce revêtement antireflet 160 peut se terminer par une couche de protection optionnelle (non illustrée), en particulier à base d'oxyde, notamment sous stoechiométrique en oxygène.

Lorsqu'un empilement monocouche fonctionnelle est utilisé dans un vitrage multiple 100 de structure double vitrage, comme illustré en figure 4, ce vitrage comporte deux substrats 10, 30 qui sont maintenus ensemble par une structure de châssis 90 et qui sont séparés l'un de l'autre par une lame de gaz intercalaire 15.

Le vitrage réalise ainsi une séparation entre un espace extérieur ES et un espace intérieur IS.

L'empilement selon l'invention, du fait de sa résistance mécanique élevée, peut être positionné en face 4 (sur la feuille la plus à l'intérieur du bâtiment en considérant le sens incident de la lumière solaire entrant dans le bâtiment et sur sa face tournée vers l'intérieur).

La figure 4 illustre ce positionnement (le sens incident de la lumière solaire entrant dans le bâtiment étant illustré par la double flèche) en face 4 d'un empilement 34 de couches minces positionné sur une face extérieure 31 du substrat 30 en contact avec l'espace intérieur IS, l'autre face 29 du substrat 30 étant en contact avec la lame de gaz intercalaire 15.

Toutefois, il peut aussi être envisagé que dans cette structure de double vitrage, l'un des substrats présente une structure feuilletée ; toutefois, il n'y a pas de confusion possible car dans une telle structure, il n'y a pas de lame de gaz intercalaire.

Une série de sept exemples a été réalisée :
- l'exemple 1 constitue un exemple de référence : il s'agit d'un empilement monocouche fonctionnelle sans aucune couche métallique discontinue ;
- l'exemple 2 est un exemple comparatif qui se base sur l'exemple 1 et qui comporte en outre, en partie supérieure de l'empilement monocouche fonctionnelle (c'est-à-dire au-dessus de cette couche fonctionnelle, en partant du substrat), une couche métallique absorbante 167' ;
- l'exemple 3 est un exemple qui se base sur l'exemple 1 et qui comporte en outre, en partie supérieure de l'empilement monocouche fonctionnelle, une couche métallique discontinue 167, supérieure ;
- l'exemple 4 est un exemple comparatif qui se base sur l'exemple 1 et qui comporte en outre, en partie inférieure de l'empilement monocouche fonctionnelle (c'est-à-dire entre cette couche fonctionnelle et le substrat), une couche absorbante 123' ;
- l'exemple 5 est un exemple qui se base sur l'exemple 1 et qui comporte en outre, en partie inférieure de l'empilement monocouche fonctionnelle, une couche métallique discontinue 123, inférieure ;
- l'exemple 6 est un exemple comparatif qui se base sur l'exemple 1 et qui comporte en outre, en partie inférieure de l'empilement monocouche fonctionnelle (c'est-à-dire entre cette couche fonctionnelle et le substrat), une couche absorbante 123' et qui comporte en outre, en partie supérieure de l'empilement monocouche fonctionnelle (c'est-à-dire au-dessus de cette couche fonctionnelle, en partant du substrat), une couche absorbante 167' ;
- l'exemple 7 est un exemple qui se base sur l'exemple 1 et qui comporte en outre, en partie inférieure de l'empilement monocouche fonctionnelle, une couche métallique discontinue 123, inférieure et qui comporte en outre, en partie supérieure de l'empilement monocouche fonctionnelle, une couche métallique discontinue 167, supérieure.

Pour tous les empilements ci-après, les conditions de dépôt des couches sont :

| Couche | Cible employée | Pression de dépôt | Gaz |
|---|---|---|---|
| Si₃N₄:Al | Si:Al à 92:8 % wt | 1,5.10⁻³ mbar | Ar /(Ar + N₂) à 45 % |
| TiO₂ | TiO₂ | 1,5.10⁻³ mbar | Ar /(Ar + O₂) à 45 % |
| ZnO | ZnO | 1,5.10⁻³ mbar | Ar /(Ar + O₂) à 83 % |
| NiCr | NiCr à 80:20 % wt | 2.10⁻³ mbar | Ar à 100 % |
| Ag | Ag | 8.10⁻³ mbar | Ar à 100 % |

Les couches déposées pour ces exemples peuvent ainsi être classées en cinq catégories :
i- couches en matériau diélectrique/antireflet, présentant un rapport n/k sur toute la plage de longueur d'onde du visible supérieur à 5 : couches 121, 121', 128, 162, 168, 169, 169' en Si₃N₄:Al, ou TiO₂, ou ZnO,
ii- couches fonctionnelles métalliques 140 continues en Ag, matériau à propriétés de réflexion dans l'infrarouge et/ou dans le rayonnement solaire
iii- couches de sur-blocage 150 destinées à protéger la couche fonctionnelle contre une modification de sa nature lors du dépôt de l'empilement : Ni, NiCr ; leur influence sur les propriétés optiques et énergétiques est en général ignoré lorsqu'elles présentent une épaisseur faible (égale ou inférieure à 2 nm)
iv- pour les exemples 3, 5 et 7 : couches métalliques discontinues 123 et/ou 167, ou couches « DML » pour « Discontinuous Metallic Layer » en anglais.
v- pour les exemples 2, 4 et 6 comparatifs : couches absorbantes 123' et/ou 167' métalliques, en titane ; ce type de couche est une couche continue.

Dans tous les exemples l'empilement de couches minces a été déposé sur un substrat, G, en verre sodo-calcique clair d'une épaisseur de 4 mm de la marque Planilux, distribué par la société SAINT-GOBAIN.

Pour ces empilements,
- T_{L} indique : la transmission lumineuse dans le visible en %, mesurée selon l'illuminant D65 à 2° ;
- a*_{T} et b*_{T} indique la couleur en transmission a* et b* dans le système LAB mesurées selon l'illuminant D65 à 2° ;
- R_{G} indique : la réflexion lumineuse côté verre (surface du substrat opposée à celle sur laquelle est déposée l'empilement) dans le visible en %, mesurée selon l'illuminant D65 à 2° ;
- a*_{G} et b*_{G} indique la couleur en réflexion a* et b* dans le système LAB mesurées selon l'illuminant D65 à 2°, côté du substrat opposé au côté revêtu (face 29) ;
- R_{c} indique : la réflexion lumineuse côté empilement de couches minces (surface 31 du substrat) dans le visible en %, mesurée selon l'illuminant D65 à 2° ;
- a*_{c} et b*_{c} indiquent la couleur en réflexion a* et b* dans le système LAB mesurées selon l'illuminant D65 à 2°, côté du substrat revêtu (face 31)
- g indique le facteur g, ou facteur solaire d'une configuration :
   - pour les exemples 1 à 3 : de l'empilement disposé en face 3 d'un double vitrage comportant deux substrats en verre de 4 mm séparés d'une lame de gaz argon de 16 mm, le substrat porteur de l'empilement étant ainsi le deuxième substrat traversé par la lumière solaire incidente, et
   - pour les exemples 4 à 7 : de l'empilement disposé en face 2 d'un double vitrage comportant deux substrats en verre de 4 mm séparés d'une lame de gaz argon de 16 mm, le substrat porteur de l'empilement étant ainsi le premier substrat traversé par la lumière solaire incidente.

Ce facteur est déterminé par la norme EN 410 et correspond à la somme de la transmission énergétique directe à travers le vitrage et du transfert de chaleur secondaire vers l'intérieur.

Selon l'invention, une couche métallique discontinue, DML est une couche discontinue qui présente, de préférence, un taux d'occupation surfacique (en proportion de la surface de la couche qui est située juste sous la couche métallique discontinue et qui est couverte par la couche métallique discontinue) compris entre 50 % et 98 %.

Selon l'invention, une couche métallique discontinue, DML est une couche qui comporte, de préférence, majoritairement (à au moins 50 % en ratio atomique) au moins un des métaux choisi dans la liste : Ag, Au, Cu, Pt.

Selon l'invention, une couche métallique discontinue, DML est une couche qui est, de préférence, encadrée de chaque côté, au-dessus et en dessous, par une couche en matériau diélectrique/antireflet, dont l'indice de réfraction n est, de préférence, au moins égal à 1,9.

La figure 5 montre, de gauche à droite :
- un taux d'occupation surfacique de 53 % obtenu avec une épaisseur d'argent de 2 nm ; cet empilement présentant une émissivité ε = 88,7 % ;
- un taux d'occupation surfacique de 63 % obtenu avec une épaisseur d'argent de 3 nm ; cet empilement présentant une émissivité ε = 49,3 % ;
- un taux d'occupation surfacique de 84 % obtenu avec une épaisseur d'argent de 4 nm ; cet empilement présentant une émissivité ε = 23,9 % ;
- un taux d'occupation surfacique de 98 % obtenu avec une épaisseur d'argent de 5 nm ; cet empilement présentant une émissivité ε = 15,7 %,
obtenus pour un empilement Z de couches minces présentant la structure : Substrat / ZnO / couche DML en Ag / ZnO, chaque couche de ZnO (d'un indice de réfraction de n = 1,9) présentant une épaisseur de 10 nm.

Les calculs théoriques montrent qu'il est possible d'obtenir avec l'empilement de type Z une émissivité ε_{Z}, qui est inférieure à celle du substrat seul pour une épaisseur d'argent de la DML égale ou inférieure à 5 nm, c'est-à-dire pour un taux d'occupation surfacique compris entre 50 % et 98 %, tout en étant supérieure à celle constatée.

Dans le présent document, lorsqu'il est fait référence à l'épaisseur e d'une DML, il ne s'agit pas de l'épaisseur mesurée dans les zones couvertes par la DML ou d'une épaisseur moyenne, mais de l'épaisseur qui serait obtenue si la couche était continue.

Cette valeur est accessible en considérant la vitesse de dépôt de la couche (ou plus précisément la vitesse de défilement du substrat dans l'enceinte de dépôt de la couche fonctionnelle métallique), la quantité de matière pulvérisée par unité de temps, ainsi que la surface sur laquelle est opérée le dépôt. Cette épaisseur est très pratique car elle permet une comparaison directe avec les couches fonctionnelles continues.

L'épaisseur e' est ainsi l'épaisseur qui serait mesurée si la couche déposée était continue.

En pratique, si habituellement, dans les mêmes conditions de dépôt par pulvérisation magnétron (très faible pression, composition de la cible, vitesse de défilement du substrat, puissance électrique à la cathode) l'épaisseur de la couche fonctionnelle est de 10 nm, il faut et il suffit, de diminuer la vitesse de défilement du substrat de moitié pour obtenir une épaisseur de couche fonctionnelle qui est de la moitié, c'est-à-dire de 5 nm.

Sur cette figure 5, il s'agit de ce qui a été observé par microscopie électronique à transmission, MET, illustré en mode binaire (noir - blanc). Sur les quatre morceaux de cette figure, l'argent est en blanc et le ZnO en noir.

Il a été constaté que pour un empilement Z de ce type, l'énergie d'adhésion est à peu près constante pour une épaisseur d'argent supérieure à 5 nm : cette énergie est comprise entre 1,0 et 1,5 J/m², ce qui est assez faible.

Le tableau 1 ci-après illustre les épaisseurs géométriques ou physiques (et non pas les épaisseurs optiques) en nanomètres de chacune des couches des exemples 1 à 3, en référence à la figure 1 :

**Tableau 1**

| Couche | Ex. 1 | Ex. 2 | Ex. 3 |
|---|---|---|---|
| 169 - TiO₂ | 2 nm | 2 nm | 2 nm |
| | | 167' - Ti 1 nm | 167 - Ag 1 nm |
| 169' - TiO₂ | | 2 nm | 2 nm |
| 168 - Si₃N₄:Al | 30 nm | 28 nm | 28 nm |
| 164 - TiO₂ | 11 nm | 11 nm | 11 nm |
| 162 - ZnO | 6 nm | 6 nm | 6 nm |
| 140 - Ag | 13 nm | 13 nm | 13 nm |
| 128 - ZnO | 5 nm | 5 nm | 5 nm |
| 124 - TiO₂ | 23 nm | 23 nm | 23 nm |

Pour ces exemples 1 à 3, le revêtement antireflet 120 disposé entre la face 31 et l'unique couche fonctionnelle métallique 140 comporte une couche antireflet 124 d'indice haut en un matériau présentant un indice de réfraction compris entre 2,3 et 2,7 à 550 nm, cette couche antireflet 124 d'indice haut présentant de préférence une épaisseur physique comprise entre 5 et 25 nm.

Pour ces exemples 1 à 3, le revêtement antireflet 160 disposé au-dessus de l'unique couche fonctionnelle métallique 140, comporte une couche antireflet 162 d'indice moyen en un matériau présentant un indice de réfraction compris entre 1,8 et 2,2 à 550 nm, cette couche antireflet 162 d'indice moyen présentant de préférence une épaisseur physique comprise entre 5 et 35 nm.

Le tableau 2 ci-après illustre les épaisseurs physiques en nanomètres de chacune des couches des exemples 4 et 5, en référence à la figure 2 :

**Tableau 2**

| Couche | Ex. 4 | Ex. 5 |
|---|---|---|
| 168 - Si₃N₄:At | 40 nm | 40 nm |
| 162 - ZnO | 5 nm | 5 nm |
| 150 - NiCr | 0,5 nm | 0,5 nm |
| 140 - Ag | 13 nm | 13 nm |
| 128 - ZnO | 5 nm | 5 nm |
| 121' - TiO₂ | 20 nm | 20 nm |
| | 123' - NiCr 1 nm | 123 - Ag 1 nm |
| 121 - TiO₂ | 3 nm | 3 nm |

Le tableau 3 ci-après illustre les épaisseurs physiques en nanomètres de chacune des couches des exemples 6 et 7, en référence à la figure 3 :

**Tableau 3**

| Couche | Ex. 6 | Ex. 7 |
|---|---|---|
| 169 - TiO₂ | 2 nm | 2 nm |
| | 167' - Ti 1 nm | 167 - Ag 1 nm |
| 169' - TiO₂ | 2 nm | 2 nm |
| 168 - Si₃N₄:Al | 28 nm | 28 nm |
| 162 - ZnO | 5 nm | 5 nm |
| 150 - NiCr | 0,5 nm | 0,5 nm |
| 140 - Ag | 13 nm | 13 nm |
| 128 - ZnO | 5 nm | 5 nm |
| 121' - TiO₂ | 20 nm | 20 nm |
| | 123' - NiCr 1 nm | 123 - Ag 1 nm |
| 121 - TiO₂ | 3 nm | 3 nm |

Les exemples 2, 4 et 6 sont comparables respectivement aux exemples 3, 5 et 7 car ils comportent tous une couche fonctionnelle métallique unique en un même matériau (Ag) et de la même épaisseur ; ces exemples sont aussi comparables à l'exemple 1 car il comporte aussi une couche fonctionnelle métallique unique en un même matériau (Ag) et de la même épaisseur ; les revêtements antireflets ne sont pas identiques d'une série (série des exemples 2-3, série des exemples 4-5, série des exemples 6-7) à l'autre car leurs compositions ont été optimisées pour tenter d'obtenir les meilleurs performances possibles.

Le tableau suivant présente les principales caractéristiques optiques des exemples 3, 5 et 7 comprenant une (ex. 3 et 5) ou deux (ex. 7) couche(s) DML et compare ces caractéristiques respectivement à celles des exemples 2, 4 et 6 comprenant une (ex. 2 et 4) ou deux (ex. 6) couche(s) absorbante(s), en Ti d'une épaisseur équivalente à celle de chaque couche DML, ainsi qu'aux caractéristiques de l'exemple 1 qui ne comporte ni couche DML, ni couche absorbante.

**Tableau 4**

| | Ex. 1 | Ex. 2 | Ex. 3 | Ex. 4 | Ex. 5 | Ex. 6 | Ex. 7 |
|---|---|---|---|---|---|---|---|
| T_{L}(%) | 84,3 | 68,3 | 70,4 | 66,8 | 65,4 | 46,1 | 44,3 |
| a*T | -2,02 | -3,02 | -3,73 | -2,4 | 0,08 | -3,32 | 2,55 |
| b*_{T} | 4,18 | 1,39 | 3,48 | 6,8 | -0,4 | 0,82 | -6,81 |
| R_{G}(%) | | | | 9,9 | 8,52 | 17,38 | 12,1 |
| a*_{G} | | | | 0,9 | -1,7 | 0,53 | -0,41 |
| b*_{G} | | | | -6,4 | -7,1 | 7,01 | -5,09 |
| R_{C}(%) | 8,51 | 5,90 | 8,26 | 13,5 | 10,3 | 13,36 | 6,53 |
| a*_{C} | 2,94 | -4,41 | -5,39 | 1,7 | 2,32 | 1,39 | 1,34 |
| b*_{C} | -12,18 | -20,10 | -26,10 | -16,1 | -12,9 | -16,33 | -31,26 |
| g | 0,57 | 0,61 | 0,63 | 0,44 | 0,46 | 0,55 | 0,57 |

Il a ainsi été constaté qu'il est possible de réaliser :
- un empilement monocouche fonctionnelle métallique comportant une couche métallique discontinue dans le revêtement antireflet supérieur (ex. 3) qui présente un facteur solaire g plus élevé que celui d'un empilement monocouche fonctionnelle métallique comportant une couche métallique absorbante dans le revêtement antireflet supérieur (ex. 2) pour une transmission lumineuse dans le visible quasi identique ;
- un empilement monocouche fonctionnelle métallique comportant une couche métallique discontinue dans le revêtement antireflet inférieur (ex. 5) qui présente un facteur solaire g plus élevé que celui d'un empilement monocouche fonctionnelle métallique comportant une couche métallique absorbante dans le revêtement antireflet inférieur (ex. 4) pour une transmission lumineuse dans le visible quasi identique ;
- un empilement monocouche fonctionnelle métallique comportant une couche métallique discontinue dans le revêtement antireflet inférieur et une couche métallique discontinue dans le revêtement antireflet supérieur (ex. 7) qui présente un facteur solaire g plus élevé que celui d'un empilement monocouche fonctionnelle métallique comportant une couche métallique absorbante dans le revêtement antireflet inférieur et une couche métallique absorbante dans le revêtement antireflet inférieur (ex. 6) pour une transmission lumineuse dans le visible quasi identique.

En outre, il a été constaté une amélioration de la neutralisation des couleurs, avec en particulier une couleur en transmission moins jaune, avec un b*_{T} moins élevé, voire négatif.

Les figures 6 à 8 montrent respectivement, la transmission lumineuse T_{L}, l'absorption Ab et la réflexion lumineuse côté empilement R_{c} en fonction de la longueur d'onde λ (en nm) des exemples 1 à 3.

La figure 6 montre que l'empilement à couche DML (ex. 3) permet d'obtenir une transmission lumineuse dans le visible qui est très proche de celle obtenu avec l'empilement à couche métallique absorbante (ex. 2) ; toutefois, l'absorption est plus élevée dans le visible élevé et dans le proche infrarouge (de 550 nm à 1000 nm) avec l'exemple 3 qu'avec l'exemple 2, et la réflexion côté empilement est plus faible dans le visible élevé et dans le proche infrarouge (de 550 nm à 1000 nm) avec l'exemple 3 qu'avec l'exemple 2, ce qui permet au final d'obtenir un facteur solaire plus élevé pour un même niveau de transmission lumineuse dans le visible.

Les figures 9 à 12 montrent respectivement, la transmission lumineuse T_{L}, l'absorption Ab, la réflexion lumineuse côté substrat R_{G}, et la réflexion lumineuse côté empilement R_{c} en fonction de la longueur d'onde λ (en nm) du substrat G, seul, c'est-à-dire sans aucune couche sur une de ces faces, de l'exemple 5, et des exemples 5.0, 5.1, 5.2 réalisées sur la base de l'exemple 5 ; ces exemples 5.0, 5.1, 5.2 présentent pour seule différence avec l'exemple 5 :
- l'épaisseur de la couche DML qui est de 0 nm (absence de couche DML) pour l'exemple 5.0,
- l'épaisseur de la couche DML qui est de 0,9 nm pour l'exemple 5.1, et
- l'épaisseur de la couche DML qui est de 1,2 nm pour l'exemple 5.2.

Ces figures montrent que la présence de la couche DML diminue certes la transmission lumineuse du fait que l'absorption augmente mais la réflexion lumineuse côté substrat et côté empilement est faible.

Augmenter l'épaisseur nominale de DML permet d'augmenter le niveau global d'absorption et la sélectivité en couleur.

Ces essais ont montré en particulier que la plage d'épaisseur e' de 0,9 à 1,2 nm pour une couche métallique discontinue est particulièrement favorable pour l'obtention d'une transmission lumineuse dans le visible relativement élevée (65-68 %) tout en ayant une réflexion lumineuse côté verre assez basse (6-7 %) et une réflexion lumineuse côté empilement assez basse (8-9 %).

En outre, de faibles valeurs de b*_{c} (de l'ordre de -15), de faibles valeurs de b*_{G} (de l'ordre de -10) et de faibles valeurs de a*_{T} (de l'ordre de -1,0 à +0,3) ont été obtenues.

Pour tous les exemples précédents, la et/ou chaque couche métallique discontinue 123, 167 est située d'une part directement sur une couche antireflet 121', 169' présentant un indice de réfraction à 550 nm d'au moins 1,9 et même en l'occurrence de 2,3 du fait de l'utilisation de TiO₂ et d'autre part directement sous une couche antireflet 121, 169 présentant un indice de réfraction à 550 nm d'au moins 1,9 et même en l'occurrence de 2,3 du fait de l'utilisation de TiO₂, l'indice de réfraction de ladite couche antireflet 121', 169' directement inférieure étant ici identique à l'indice de réfraction de ladite couche antireflet 121, 169 directement supérieure.

Des essais ont montré qu'il est possible d'utiliser du nitrure de silicium, Si₃N₄:Al, d'indice de réfraction à 550 nm de 2,0 à la place du TiO₂ pour les couches 121, 121', 169, 169'.

Il a été constaté que la et/ou chaque couche DML 123, 167 présente un spectre d'absorption tel que l'absorption est relativement faible dans la gamme de longueurs d'onde de 380 nm à 480 nm, par rapport à l'absorption dans la gamme de longueurs d'onde de 480 nm à 780 nm.

Il a été constaté par ailleurs qu'il ne faut pas que la et/ou chaque couche DML 123, 167 soit en contact direct, ni en dessous, ni au-dessus, avec une couche métallique continue car dans ce cas, le spectre d'absorption spécifique de la couche DML se confond avec le spectre d'absorption relativement constant dans le visible (de 380 nm à 780 nm) de la couche métallique continue qui est à son contact.

Les figures 13 et 14 illustrent respectivement une structure d'un empilement 35 bicouches fonctionnelles et une structure d'un empilement 36 tri-couches fonctionnelles, déposées sur un substrat 30 verrier, transparent, et plus précisément sur une face 31 de ce substrat 30.

Chaque couche fonctionnelle 140 180, 220, qui est de préférence majoritairement à base d'argent ou d'alliage métallique contenant de l'argent et de préférence encore uniquement en argent, est disposée entre deux revêtements antireflet, un revêtement antireflet sous-jacent 120, 160, 200 situé en dessous de chaque couche fonctionnelle 140, 180, 220 en direction du substrat 30 et un revêtement antireflet sus-jacent 160, 200, 240 disposé au-dessus de chaque couche fonctionnelle 140, 180, 220 à l'opposé du substrat 30.

Chaque revêtement antireflet 120, 160, 200, 240 comportent au moins une couche antireflet 128, 168, 208, 248.

La figure 3 montre un empilement 34 qui comporte une couche fonctionnelle métallique 140, de préférence majoritairement à base d'argent ou en argent, qui est l'unique couche fonctionnelle métallique de l'empilement et deux couches métalliques discontinues 123, 167, l'une étant située entre d'une part ladite face 31 et d'autre part la couche fonctionnelle métallique 140 en partant de ladite face 31 et l'autre étant située au-dessus de la couche fonctionnelle métallique 140 en partant de ladite face 31.

La figure 13 illustre une solution similaire pour un empilement 35 bicouche fonctionnelles. Cet empilement 35 comporte deux couches fonctionnelles métalliques 140, 180, de préférence majoritairement à base d'argent ou en argent, et deux couches métalliques discontinues 123, 167, l'une étant située entre d'une part ladite face 31 et d'autre part la première couche fonctionnelle métallique 140 en partant de ladite face 31 et l'autre étant située au-dessus de la seconde couche fonctionnelle métallique 180 en partant de ladite face 31.

La figure 14 illustre une solution similaire pour un empilement 36 tri-couche fonctionnelles. Cet empilement 36 comporte trois couches fonctionnelles métalliques 140, 180, 220, de préférence majoritairement à base d'argent ou en argent et deux couches métalliques discontinues 123, 167, l'une étant située entre d'une part ladite face 31 et d'autre part la première couche fonctionnelle métallique 140 en partant de ladite face 31 et l'autre étant située au-dessus de la troisième couche fonctionnelle métallique 220 en partant de ladite face 31.

Ces trois configurations à double DML permettent de réaliser des empilements à réflexion lumineuse basse mais présentant des couleurs en transmission et en réflexion plus neutres que si les couches métalliques discontinues étaient remplacées toutes les deux dans chaque configuration par une couche métallique absorbante.

Sur la base de ces figures 13 et 14, il est possible de prévoir une unique couche métallique discontinue inférieure 123 qui est située entre d'une part ladite face 31 et d'autre part la première couche fonctionnelle métallique 140 en partant de ladite face 31 ou une unique couche métallique discontinue supérieure 167 qui est située au-dessus de la dernière couche fonctionnelle métallique 180, 220 en partant de ladite face 31.

Utiliser majoritairement un (ou plusieurs) métal noble du type Ag, Au, PT ou Cu permet de déposer une DML d'une manière simple et fiable par pulvérisation magnétron car ce procédé permet de bien gérer la croissance en ilots ; en effet, l'absorption sélective repose en particulier sur le caractère plasmonique du métal qui est rendu possible par une structuration en ilot.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (30) revêtu sur une face (31) d'un empilement de couches minces (34, 35, 36) comportant au moins une couche fonctionnelle métallique (140, 180, 220) à base d'argent ou en argent présentant une épaisseur e comprise entre 7 nm et 20 nm en intégrant ces valeurs et deux revêtements antireflet (120, 160, 200, 240), lesdits revêtements antireflet comportant chacun au moins une couche antireflet (128, 168, 208, 248), ladite couche fonctionnelle (140) étant disposée entre les deux revêtements antireflet (120, 160), ***caractérisé en ce que*** ledit empilement comporte une couche métallique discontinue inférieure (123) présentant une épaisseur e' comprise entre 0,5 nm et 5 nm en intégrant ces valeurs, ladite couche métallique discontinue inférieure (123) étant située entre d'une part ladite face (31) et d'autre part une unique ou la première couche fonctionnelle métallique (140) en partant de ladite face (31), ladite, ou chaque, couche métallique discontinue (123, 167) est située d'une part directement sur une couche antireflet (121', 169') présentant un indice de réfraction à 550 nm d'au moins 1,9 et d'autre part directement sous une couche antireflet (121, 169) présentant un indice de réfraction à 550 nm d'au moins 1,9.

2. Substrat (30) selon la revendication 1, ***caractérisé en ce que*** ledit empilement comporte une unique couche métallique discontinue inférieure (123).

3. Substrat (30) selon la revendication 1, ***caractérisé en ce que*** ledit empilement comporte en outre une couche métallique discontinue supérieure (167) présentant une épaisseur e' comprise entre 0,5 nm et 5 nm en intégrant ces valeurs, ladite couche métallique discontinue supérieure (167) étant située au-dessus d'une unique ou de la dernière couche fonctionnelle métallique (140, 180, 220) en partant de ladite face (31).

4. Substrat (30) selon l'une quelconque des revendications 1 à 3, ***caractérisé en ce que*** l'indice de réfraction de ladite couche antireflet (121', 169') directement inférieure est identique à l'indice de réfraction de ladite couche antireflet (121, 169) directement supérieure.

5. Substrat (30) selon l'une quelconque des revendications 1 à 4, ***caractérisé en ce que*** ladite, ou chaque, couche métallique discontinue (123, 167) est située d'une part directement sur une couche antireflet (121', 169') présentant une épaisseur optique à 550 nm comprise entre 1 nm et 8 nm en intégrant ces valeurs, voire comprise entre 2 nm et 6 nm en intégrant ces valeurs et d'autre part directement sous une couche antireflet (121, 169) présentant une épaisseur optique à 550 nm comprise entre 1 nm et 8 nm en intégrant ces valeurs, voire comprise entre 2 nm et 6 nm en intégrant ces valeurs.

6. Substrat (30) selon l'une quelconque des revendications 1 à 5, ***caractérisé en ce que*** ladite, ou chaque, couche métallique discontinue (123, 167) est à base d'argent ou est en argent.

7. Substrat (30) selon l'une quelconque des revendications 1 à 6, ***caractérisé en ce que*** ledit revêtement antireflet (120, 160, 200) disposé sous chaque couche fonctionnelle métallique (140, 180, 220) comporte une couche antireflet (128, 168, 208) d'indice moyen en un matériau présentant un indice de réfraction compris entre 1,8 et 2,2 à 550 nm, cette couche antireflet (128, 168, 208) d'indice moyen étant de préférence à base d'oxyde et/ou cette couche antireflet (128, 168, 208) d'indice moyen présentant de préférence une épaisseur physique comprise entre 5 et 35 nm.

8. Substrat (30) selon l'une quelconque des revendications 1 à 7, ***caractérisé en ce que*** ledit revêtement antireflet (120) disposé entre la face (31) et une première ou l'unique couche fonctionnelle métallique (140) comporte une couche antireflet (124) d'indice haut en un matériau présentant un indice de réfraction compris entre 2,3 et 2,7 à 550 nm, cette couche antireflet (124) d'indice haut étant de préférence à base d'oxyde et/ou cette couche antireflet (124) d'indice haut présentant de préférence une épaisseur physique comprise entre 5 et 25 nm.

9. Substrat (30) selon l'une quelconque des revendications 1 à 8, ***caractérisé en ce que*** le revêtement antireflet (160) disposé au-dessus d'une première ou l'unique couche fonctionnelle métallique (140), à l'opposé de la face (31), comporte une couche antireflet (162) d'indice moyen en un matériau présentant un indice de réfraction compris entre 1,8 et 2,2 à 550 nm, cette couche antireflet (162) d'indice moyen étant de préférence à base d'oxyde et/ou cette couche antireflet (162) d'indice moyen présentant de préférence une épaisseur physique comprise entre 5 et 35 nm.

10. Vitrage multiple (100) comportant au moins deux substrats (10, 30) qui sont maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats, au moins un substrat (30) étant selon l'une quelconque des revendications 1 à 9.

11. Utilisation d'une, et de préférence d'au plus deux, couche(s) métallique(s) discontinue(s) (123, 167) dans un empilement de couches minces (34, 35, 36) qui est déposé sur un substrat (30) selon l'une quelconque des revendications 1 à 9.

12. Procédé de dépôt d'une, et de préférence d'au plus deux, couche(s) métallique(s) discontinue(s) (123, 167) dans un empilement de couches minces (34, 35, 36) qui est déposé sur un substrat (30) selon l'une quelconque des revendications 1 à 9.

## Patentansprüche

1. Substrat (30), das auf eine Fläche (31) einer Stapelung von Dünnschichten (34, 35, 36) beschichtet ist, die mindestens eine funktionelle Metallschicht (140, 180, 220) auf Silberbasis oder aus Silber, die eine Dicke e zwischen 7 nm und 20 nm unter Einbeziehung dieser Werte vorweist, und zwei Antireflexbeschichtungen (120, 160, 200, 240) aufweist, wobei die Antireflexbeschichtungen jeweils mindestens eine Antireflexschicht (128, 168, 208, 248) aufweisen, wobei die funktionelle Schicht (140) zwischen den zwei Antireflexbeschichtungen (120, 160) angeordnet ist,
***dadurch gekennzeichnet, dass*** die Stapelung eine untere diskontinuierliche Metallschicht (123) aufweist, die eine Dicke e' zwischen 0,5 nm und 5 nm unter Einbeziehung dieser Werte vorweist, wobei die untere diskontinuierliche Metallschicht (123) ausgehend von der Fläche (31) zwischen einerseits der Fläche (31) und andererseits einer einzelnen oder der ersten funktionellen Metallschicht (140) gelegen ist, wobei die oder jede diskontinuierliche Metallschicht (123, 167) einerseits direkt auf einer Antireflexschicht (121', 169'), die einen Brechungsindex bei 550 nm mindestens 1,9 vorweist, und andererseits direkt unter einer Antireflexschicht (121, 169) liegt, die einen Brechungsindex bei 550 nm von mindestens 1,9 vorweist.

2. Substrat (30) nach Anspruch 1, ***dadurch gekennzeichnet, dass*** die Stapelung eine einzelne untere diskontinuierliche Metallschicht (123) aufweist.

3. Substrat (30) nach Anspruch 1, ***dadurch gekennzeichnet, dass*** die Stapelung ferner eine obere diskontinuierliche Metallschicht (167) aufweist, die eine Dicke e' zwischen 0,5 nm und 5 nm unter Einbeziehung dieser Werte vorweist, wobei die obere diskontinuierliche Metallschicht (167) ausgehend von der Fläche (31) über einer einzelnen oder der letzten funktionellen Metallschicht (140, 180, 220) liegt.

4. Substrat (30) nach einem der Ansprüche 1 bis 3,
***dadurch gekennzeichnet, dass*** der Brechungsindex der direkt unteren Antireflexschicht (121', 169') gleich dem Brechungsindex der direkt oberen Antireflexschicht (121, 169) ist.

5. Substrat (30) nach einem der Ansprüche 1 bis 4,
***dadurch gekennzeichnet, dass*** die oder jede diskontinuierliche Metallschicht (123, 167) einerseits direkt auf einer Antireflexschicht (121', 169'), die eine optische Dicke bei 550 nm zwischen 1 nm und 8 nm unter Einbeziehung dieser Werte, sogar zwischen 2 nm und 6 nm unter Einbeziehung dieser Werte vorweist und andererseits direkt unter einer Antireflexschicht (121, 169) gelegen ist, die eine optische Dicke bei 550 nm zwischen 1 nm und 8 nm unter Einbeziehung dieser Werte, sogar zwischen 2 nm und 6 nm unter Einbeziehung dieser Werte vorweist.

6. Substrat (30) nach einem der Ansprüche 1 bis 5,
***dadurch gekennzeichnet, dass*** die oder jede diskontinuierliche Metallschicht (123, 167) auf Basis von Silber oder aus Silber ist.

7. Substrat (30) nach einem der Ansprüche 1 bis 6,
***dadurch gekennzeichnet, dass*** die Antireflexbeschichtung (120, 160, 200), die unter jeder funktionellen Metallschicht (140, 180, 220) angeordnet ist, eine Antireflexschicht (128, 168, 208) mit mittlerem Index aus einem Material aufweist, das einen Brechungsindex zwischen 1,8 und 2,2 bei 550 nm vorweist, wobei diese Antireflexschicht (128, 168, 208) mit mittlerem Index vorzugsweise auf Oxidbasis ist und/oder diese Antireflexschicht (128, 168, 208) mit mittlerem Index vorzugsweise eine physikalische Dicke zwischen 5 und 35 nm vorweist.

8. Substrat (30) nach einem der Ansprüche 1 bis 7,
***dadurch gekennzeichnet, dass*** die Antireflexbeschichtung (120), die zwischen der Fläche (31) und einer ersten oder der einzigen diskontinuierlichen funktionellen Metallschicht (140) angeordnet ist, eine Antireflexschicht (124) mit hohem Index aus einem Material aufweist, das einen Brechungsindex zwischen 2,3 und 2,7 bei 550 nm vorweist, wobei diese Antireflexschicht (124) mit hohem Index vorzugsweise auf Oxidbasis ist und/oder diese Antireflexschicht (124) mit hohem Index vorzugsweise eine physikalische Dicke zwischen 5 und 25 nm vorweist.

9. Substrat (30) nach einem der Ansprüche 1 bis 8,
***dadurch gekennzeichnet, dass*** die Antireflexbeschichtung (160), die über einer ersten oder der einzigen funktionellen Metallschicht (140) gegenüber der Fläche (31) angeordnet ist, eine Antireflexschicht (162) mit mittlerem Index aus einem Material aufweist, das einen Brechungsindex zwischen 1,8 und 2,2 bei 550 nm vorweist, wobei diese Antireflexschicht (162) mit mittlerem Index vorzugsweise auf Oxidbasis ist und/oder diese Antireflexschicht (162) mit mittlerem Index vorzugsweise eine physikalische Dicke zwischen 5 und 35 nm vorweist.

10. Mehrfachverglasung (100), die mindestens zwei Substrate (10, 30) aufweist, die durch eine Rahmenstruktur (90) zusammengehalten werden, wobei die Verglasung eine Trennung zwischen einem Außenraum (ES) und einem Innenraum (IS) herstellt, wobei mindestens ein Zwischenlagengasspalt (15) zwischen den zwei Substraten angeordnet ist, wobei mindestens ein Substrat (30) nach einem der Ansprüche 1 bis 9 ist.

11. Verwendung einer, und vorzugsweise von höchstens zwei diskontinuierlichen Metallschicht(en) (123, 167) in einer Stapelung von Dünnschichten (34, 35, 36), die auf ein Substrat (30) nach einem der Ansprüche 1 bis 9 aufgebracht ist.

12. Verfahren zum Aufbringen einer, und vorzugsweise von höchstens zwei diskontinuierlichen Metallschicht(en) (123, 167) in einer Stapelung von Dünnschichten (34, 35, 36), die auf ein Substrat (30) nach einem der Ansprüche 1 bis 9 aufgebracht ist.

## Claims

1. A substrate (30) coated on one face (31) with a thin-film multilayer (34, 35, 36) comprising at least one functional metal film (140, 180, 220) based on silver or made of silver having a thickness e comprised between 7 nm and 20 nm inclusive of these values, and two antireflection coatings (120, 160, 200, 240), said antireflection coatings each comprising at least one antireflection film (128, 168, 208, 248), said functional film (140) being placed between the two antireflection coatings (120, 160), ***characterized in that*** said multilayer comprises a lower discontinuous metal film (123) having a thickness e' comprised between 0.5 nm and 5 nm inclusive of these values, said lower discontinuous metal film (123) being located between, on the one hand, said face (31) and, on the other hand, the only or first functional metal film (140) as counted starting from said face (31), said, or each, discontinuous metal film (123, 167) is located, on the one hand, directly on an antireflection film (121', 169') having a refractive index at 550 nm of at least 1.9, and, on the other hand, directly under an antireflection film (121, 169) having a refractive index at 550 nm of at least 1.9.

2. The substrate (30) as claimed in claim 1, ***characterized in that*** said multilayer comprises only one lower discontinuous metal film (123).

3. The substrate (30) as claimed in claim 1, ***characterized in that*** said multilayer furthermore comprises an upper discontinuous metal film (167) having a thickness e' comprised between 0.5 nm and 5 nm inclusive of these values, said upper discontinuous metal film (167) being located above the only or last functional metal film (140, 180, 220) as counted starting from said face (31).

4. The substrate (30) as claimed in any one of claims 1 to 3, ***characterized in that*** the refractive index of said antireflection film (121', 169') directly below is identical to the refractive index of said antireflection film (121, 169) directly above.

5. The substrate (30) as claimed in any one of claims 1 to 4, ***characterized in that*** said, or each, discontinuous metal film (123, 167) is located, on the one hand, directly on an antireflection film (121', 169') having an optical thickness at 550 nm comprised between 1 nm and 8 nm inclusive of these values, or even comprised between 2 nm and 6 nm inclusive of these values, and, on the other hand, directly under an antireflection film (121, 169) having an optical thickness at 550 nm comprised between 1 nm and 8 nm inclusive of these values, or even comprised between 2 nm and 6 nm inclusive of these values.

6. The substrate (30) as claimed in any one of claims 1 to 5, ***characterized in that*** said, or each, discontinuous metal film (123, 167) is based on silver or is made of silver.

7. The substrate (30) as claimed in any one of claims 1 to 6, ***characterized in that*** said antireflection coating (120, 160, 200) placed under each metal functional film (140, 180, 220) comprises an antireflection film (128, 168, 208) of middling index made of a material having a refractive index comprised between 1.8 and 2.2 at 550 nm, this antireflection film (128, 168, 208) of middling index preferably being oxide-based and/or this antireflection film (128, 168, 208) of middling index preferably having a physical thickness comprised between 5 and 35 nm.

8. The substrate (30) as claimed in any one of claims 1 to 7, ***characterized in that*** said antireflection coating (120) placed between the face (31) and a first or the only metal functional film (140) comprises an antireflection film (124) of high index made of a material having a refractive index comprised between 2.3 and 2.7 at 550 nm, this antireflection film (124) of high index preferably being oxide-based and/or this antireflection film (124) of high index preferably having a physical thickness comprised between 5 and 25 nm.

9. The substrate (30) as claimed in any one of claims 1 to 8, ***characterized in that*** the antireflection coating (160) placed above a first or the only metal functional film (140), on the side opposite the face (31), comprises an antireflection film (162) of middling index made of a material having a refractive index comprised between 1.8 and 2.2 at 550 nm, this antireflection film (162) of middling index preferably being oxide-based and/or this antireflection film (162) of middling index preferably having a physical thickness comprised between 5 and 35 nm.

10. A multiple glazing unit (100) comprising at least two substrates (10, 30) that are held together by a frame structure (90), said glazing unit separating an exterior space (ES) from an interior space (IS), in which at least one intermediate gas-filled cavity (15) is placed between the two substrates, at least one substrate (30) being as claimed in any one of claims 1 to 9.

11. The use of a, and preferably at most two, discontinuous metal film(s) (123, 167) in a thin-film multilayer (34, 35, 36) that is deposited on a substrate (30) as claimed in any one of claims 1 to 9.

12. A process for depositing a, and preferably at most two, discontinuous metal film(s) (123, 167) in a thin-film multilayer (34, 35, 36) that is deposited on a substrate (30) as claimed in any one of claims 1 to 9.
